(19) **Europäisches Patentamt**
**European Patent Office**
**Office européen des brevets**

(11) **EP 2 393 051 A1**

(12) **EUROPEAN PATENT APPLICATION**

(43) Date of publication:
**07.12.2011 Bulletin 2011/49**

(51) Int Cl.:
***G06Q 10/00*** (2006.01)

(21) Application number: **10305577.8**

(22) Date of filing: **01.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Alcatel Lucent**
**75007 Paris (FR)**

(72) Inventors:
  • **Picault, Jérome**
    **91620, Nozay (FR)**

  • **Ribiere, Myriam**
    **91620, Nozay (FR)**
  • **Senot, Christophe**
    **91620, Nozay (FR)**

(74) Representative: **Sciaux, Edmond**
    **Alcatel Lucent**
    **32 Avenue Kléber**
    **92700 Colombes (FR)**

(54) **A system for helping a user to decide to accept, or not, a proposed service or application that implies to communicate some personal data**

(57) This system (S) comprises:
- means (DHU, DHDB) for determining, for each user, divulgation levels respectively for a plurality of concepts, each available service being related to at least one of these concepts;
- means (WWCM) for computing a so called win-win value, for each service, this value representing a trade-off between the drawbacks of divulgating personal data for using this service, and the advantages brought to this user by this service, as a function of divulgation levels respectively determined for the concepts related to this service;
- means (DM) for preselecting services among available services, by selecting the services for which the computed win-win value is greater than a predetermined value;
- decision means (DM) for prompting the user, for each preselected service, to accept, or not, the divulgation of his/her personal data for benefitting from this preselected service;
- means (DM, DHU) for receiving the identifiers of the services previously allowed by the user, from the decision means (DM), and for dynamically updating the respective divulgation level for each concept that is relevant to at least one of the allowed services;
- means (UPDM, UPDB) for receiving the identifiers of the services currently allowed by the user, from the decision means (DM), and then determining a subset of personal data to be communicated to a service provider, respectively for each service allowed by the user.

Figure unique

EP 2 393 051 A1

## Description

BACKGROUND OF THE INVENTION

Field of the invention

The present invention generally relates to a system for helping a user to decide to accept, or not, a proposed service or application that implies to communicate some personal data, in a telecommunication network. Nowadays, people have access and produce themselves more and more digital data, which they like to or need to share with others. On the other side, services and applications are requesting more and more personal data for delivering more accurate information; e. g. location based services imply that a user divulgates his/her location.

Examples of services:

A user enters a bar, he has the possibility of accessing several services,
among which some are more intrusive with respect to personal information than others. For example, one first possible service could be to enter the community of the bar in order to interact with people - this service is not very much intrusive as it requires providing only contact details. Another more intrusive service could propose personalized music in the bar; if the user wants a nice atmosphere, he may be ready to share some of his interests.

Similarly, at a train station, the user can have access to a service that gives real-time information about delays, platform of the train, etc. This requires very little personal information (only the train number). A more intrusive service could propose the user to change his seat in the train to be seated to a person who shares similar interests or has the same intentions (such as staying quiet). Another example would be when getting out of the train, to share my destination for sharing a taxi (green attitude). At a museum, the user can have access to services such as getting content and explanation along the visit, that do not ask the user to disclose any information about him, other than it's current location inside the museum. Another service could help the user to define a visit according to his painting preferences. Another type of service that would be more intrusive, but could help you in having a good experience, is the one that store your visit, and propose you a new visit to complete your knowledge of the museum each time.

Description of the prior art

Whereas Digital Rights Management (DRM) technologies have been (and are being) developed to protect usage and distribution of commercial multimedia content, very few technologies currently exist to protect personal data.

Unlike commercial content, personal data never include a license, which would explicitly define the access and usage rules. Current solutions are mainly based on opt-in where a user allows once for ever that a given service or a given application accesses to his/her personal data.

On Facebook (or similar social networks web sites), a user only can explicitly specify, through some kinds of privacy rules, different levels of visibility of specific parts of his/her profile, based on a criterion of social proximity, such as friends, friends of a friends or complete strangers. These privacy rules are completely static and are context independent.

The article Collaborative Privacy - A Community-based Privacy Infrastructure - Jan Kolter, Thomas Kernchen and Günther Pernul (http://epub.uni-regensburg.de/6964/1/KKPO9.pdf) presents the concept and design of a collaborative privacy community which allows a provider-independent exchange of privacy-relevant information and ratings about service providers. Moreover, it enables users to know in advance what personal data is required for a specific service. Benefitting from the knowledge of experienced users, the privacy community facilitates a more informed decision about the disclosure and management of personal data. Even if this solution allows understanding to which level a divulgation of personal data is needed, it does not provide a flexible mechanism to make the level of divulgation evolve over time.

The PhD thesis Adaptive Privacy Management for Distributed Applications, M. Wu (http://eprints.lancs.ac.uk/ 12984/1/PhdThesis- MaomaoWu.pdf) lists several requirements for adaptive privacy management: evolution of privacy preferences, awareness of system behavior concerning privacy, convenient and timely access to privacy controls, balance between privacy and user involvement, accountability for privacy-related behavior. However, in the described implementation, privacy preferences are only managed by static rules that are managed by a 'rule evaluator' which handles possible conflicts.

Thus, none of the known solutions described above provides a flexible, context-aware privacy management. In particular, none of these solutions enables a user to take a decision, about services available at a given location, according to a personalized factor indicating their respective degrees of intrusiveness for the user.

There is a need to better handle user privacy with respect to applications and services, in order to:

- Avoid too much manual privacy-control setting, which is a tedious method, especially because the number of services and applications that will require personal data is going to increase in the next years.
- Avoid divulgating too much personal data: Currently most users (even those who are aware of security threats) are never managing access-rights as correctly as they should; they are generally applying the same rules to all of their applications or services.

- Bring explanation and advise in privacy management, by making the user more aware of what he/she wins and loses while sharing, or not, personal data requested by a service or an application. More and more services will be available anywhere in our day to day environment. Making a choice will probably be difficult. Getting a list of services that fits user preferences or needs is not enough; this list should take into account how far the user must go in disclosing personal data, and what he/she gains from this transaction. Explanation would help a user to understand the value of his/her personal data with respect to the value of a proposed service or application.

Bring flexibility in privacy management: If some disclosures of personal data have been defined, they should not be static, but instead should evolve over time according to the user's behavior; and they should be able to be altered temporarily. For instance, if the user has an urgent need of finding information, he/she may be ready to disclose more personal information than usually.

Thus, this invention aims at proposing a system for providing a flexible and context-aware privacy management.

SUMMARY OF THE INVENTION

The object of the invention is a system application for helping a user to decide to accept, or not, an available service/application that implies to communicate some personal data, characterized in that it comprises:

- means for determining, for each user, divulgation levels respectively for a plurality of concepts, each available service being related to at least one of these concepts;
- means for computing a so called win-win value, for each service, this value representing a trade-off between the drawbacks of divulgating personal data for using this service, and the advantages brought to this user by this service, as a function of divulgation levels respectively determined for the concepts related to this service;
- means for preselecting services among available services, by selecting the services for which the computed win-win value is greater than a predetermined value;
- decision means for prompting the user, for each preselected service, to accept, or not, the divulgation of his/her personal data for benefitting from this preselected service;
- means for receiving the identifiers of the services previously allowed by the user, from the decision means, and for dynamically updating the respective divulgation level for each concept that is relevant to at least one of the allowed services;
- means for receiving the identifiers of the services currently allowed by the user, from the decision means, and then determining a subset of personal data to be communicated to a service provider, respectively for each service allowed by the user.

Thanks to this system, the user gets some flexible advise to find the right balance between benefiting from services and divulgating personal data, because the means for dynamically updating the respective divulgation level for each concept that is relevant to at least one of the available services, update this decision criterion as a function of the identifiers of the services previously allowed by the user, i. e. as a function of prior behavior of the user as concerns privacy.

According to a peculiar embodiment of the system according to the present invention, it further comprises:

- means for collecting contextual information;
- means for recognizing usage patterns in the collected contextual information, selecting the elements of information that may play a role with respect to the divulgation levels, and providing filtered contextual information when the user is in a non-usual situation.

Said means for computing a so called win-win value comprise means for taking into account filtered contextual information provided by the usage pattern recognition module for determining, for said user, adapted divulgation levels respectively for a plurality of concepts, when said user is in a non-usual situation; and then computing a win-win value, for each service, as a function of the adapted divulgation levels respectively determined for the concepts related to this service.

Thanks to this characteristic, in case the user is in a non-usual situation, the means for computing a so called win-win value temporarily modify the respective divulgation level for each concept that is relevant to at least one of the available services, in order to lessen the restrictions of divulgation when the user has an urgent need of finding information. Of course, the restrictions of divulgation are reset to their usual levels when the user returns to a usual situation.

According to a preferred embodiment of the system according to the present invention, said means for recognizing usage patterns in the collected contextual information, selecting the elements of information that may play a role with respect to the divulgation levels, and providing filtered contextual information when the user is in a non-usual situation, comprise means for comparing the current pattern of contextual information with known patterns corresponding to various situations, and that have been previously observed and recorded for other users in various situations.

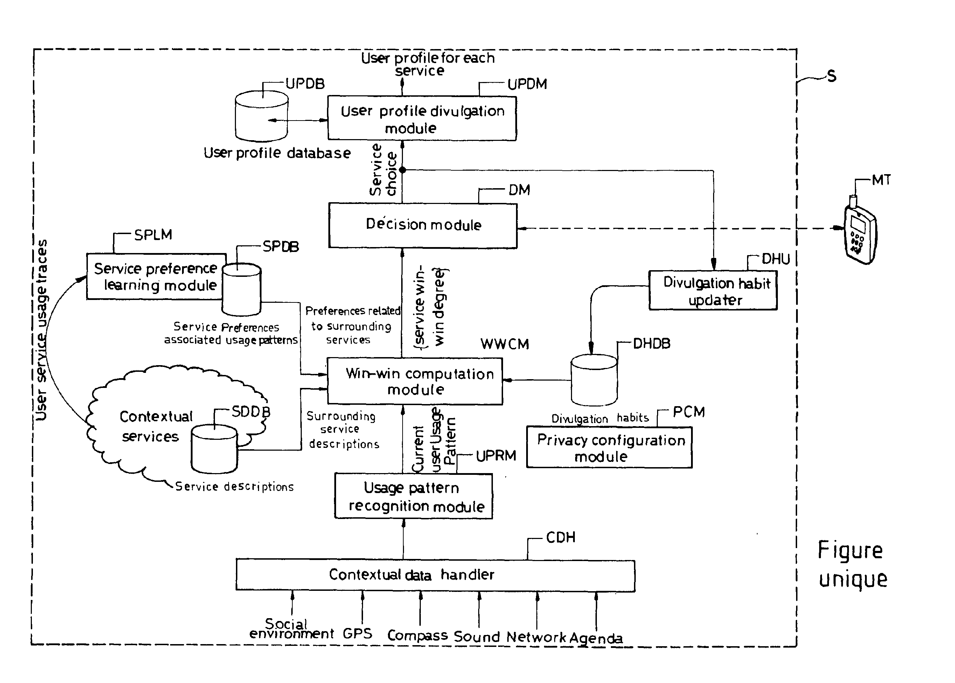

Other features and advantages of the present invention will become more apparent from the following detailed description of embodiments of the present invention, when taken in conjunction with the accompanying drawing.

BRIEF DESCRIPTION OF THE DRAWING

In order to illustrate in detail features and advantages of the present invention, the following description will be with reference to the accompanying single figure that schematically represents an embodiment of the system according to the invention.

DETAILED DESCRIPTION OF A PREFERRED EMBODIMENT

Preliminary remarks

For instance, the embodiment S, represented on the figure, is managing personal data for a user who can use a set of services available at a given location. A similar system may be used to manage personal data with respect to software applications requesting personal data. Of course, a same system may manage the privacy of many users in parallel.

This embodiment S relies on the combination of the following elements:

- A new user profile representation, wherein three dimensions are taken into account:

  -- General interest of the user for a given service $s_i$ is represented by a vector $(s_i, is_i)$ where $is_i$ denotes the interest of the user for this service $s_i$.
  -- General interest of the user for a concept $C_p$ (e. g. football, bar, railway station ... etc) is represented by a vector $(Cp, ic_p)$ where $ic_p$ represents the interest of the user for the concept $c_p$. A plurality of services may be related to a same concept.
  -- Degree of divulgation that is acceptable by the user for a service related to a given concept $c_p$ is represented by a vector $(c_p, d_p)$ where $d_p$ is a "divulgation degree" that represents how much the user is ready to divulgate his/her personal information in exchange of benefiting from a service related to the concept $c_p$.

- Addition of specific metadata $k_i$ to the description of a service $s_i$: these metadata $k_i$ describe the "kind of requested personal data required by the service $s_i$" for the completion of this service. These metadata $k_i$ indicate the level of intrusiveness of this service $s_i$ with respect to personal data.
- Analysis of each user's divulgation habits for determining a "usual divulgation level" $d_i$ for each service $s_i$. This usual divulgation level $d_i$ indicates how much the user generally tolerates divulgation of personal data, with respect to a service $s_i$. This analysis also determines context-dependent specificities with respect to privacy, these specificities being used for adding flexibility to the privacy management.

- Determining an "adapted divulgation level" $ad_i$ for each service $s_i$, that is a temporary adaptation of the usual divulgation level $d_i$, to take into account a specific user context (emergency, location, intention, social context, etc).
- Analysis of "service preferences" i. e. observing which services the user likes the most.
- Computation of a "win-win value" $w_i$ for a given service $s_i$, i.e. a value indicating the trade-off between letting the service $s_i$ access the user's personal data, on one hand, and the usefulness of the information provided by the service $s_i$ to the user, on the other hand. The win-win value $w_i$ basically represents the mutual gain in the exchange of information with the service $s_i$. This computation is based on the matching between the service description and the user's profile (general interest for the concept, and general interest for the service), but is also based on the matching between the kind of requested personal data and the adapted divulgation level for the given service $s_i$.

One *possible* way of computing the win-win value is the following one, in the case of availability of adapted divulgation levels (otherwise, replace $ad_i$ with $d_i$):

$$w_i = Sim\ (ad_i,\ ki)$$

Where:

ad$_i$ is the vector of the adapted divulgation level and $k_i$ is the metadata describing the kind of requested personal data required by the service $s_i$.
Sim is a similarity function known in the art, such as a cosine similarity function between two vectors, a Pearson correlation function, etc. (for instance cf. http://en.wikipedia.org/wiki/Cosine_similarity for the definition of cosine similarity function).
$w_i$ is computed only for the services $s_i$ that are relevant to the user, i. e. the services $s_i$ for which the user's interest about them exceeds a predefined threshold.

This win-win value $W_i$ helps the user to better understand why he/she would be favourable to divulgate personal data, and what he/she is losing in divulgating them, according to the user's interest for the service.

These user's profile dimensions are either stored on a mobile terminal of the user, or stored in a network element belonging to a trusted person, according to the architecture of the system.

The divulgation data related to the concepts are stored in a divulgation habit database DHDB.

The user preferences for services are stored in a service preference database SPDB.

The embodiment S comprises the following software modules:

- A contextual data handler CDH for collecting contextual information about the user, from relevant contextual information providers. Examples of contextual information providers may be (but are not limited to): a location server, a social environment server, a current moving location server, an agenda, etc. The contextual information elements are inferred to a level where they make sense to any user. For instance, GPS coordinates are transformed into the geographical name of a place; social environment and social networks are examined to detect friends in the vicinity; GPS coordinates are examined to detect whether the user is running, etc.

- A usage pattern recognition module UPRM for receiving contextual information collected by the contextual data handler CDH and then filtering this contextual information for selecting the elements of information that may play a role with respect to the divulgation levels. For example, an emergency situation may lead the user to share more personal data than usual situations.

- A service description database SDDB, for storing a description of each service. Each service has a public description made with WSDL (Web Services Description Language), and with UDDI (Universal Description, Discovery and Integration) a directory service where businesses can register and search for web services. In addition to this public description, the service description database SDDB stores, respectively for each service $s_i$, metadata $k_i$ describing what kind of personal information the service requests.

- A service preference learning module SPLM for studying which services a user likes the most. It comprises means for receiving a user's service usage pattern traces, from service providers (For example a web service providing train information, a web service allowing to play music in a bar, etc.) while the system S is used to help this user to take decisions.

- A service preference database SPDB, used by the service preference learning module SPLM, for storing service preferences and associated usage patterns (e. g. it knows: that the user uses the museum explanation application, how often, in which context he is using that application. This is determined by the service preference learning module SPLM). For each service $s_i$, for a given user, it stores:

  -- a service preference vector $(s_i, is_i)$ where $s_i$ is a service identifier and $is_i$ is the user's interest for this service,
  -- and usage patterns associated to this service

$s_i$.

So this service preference database SPDB stores the results of the learning, and it enables to perform statistics on win-win results between people and services with respect to their context. The information contained in the database helps the win-win computation module WWCM to take the decision at win-win level; e.g. if 90% of people in train stations are sharing their personal information (train number), then for a new user entering the train station, the win-win computation module WWCM will consider that the considered service will deserve a high win-win value.

- A divulgation habit database DHDB for storing:

  -- vectors $(c_p, i_p)$ that respectively represent the user's interests ip for the concepts $C_p$,
  -- vectors $(c_p, d_p)$ that respectively represent the user's usual divulgation levels $d_p$ for the concepts $c_p$,
  -- and context dependant specificities.

For each user, the divulgation habits database DHDB stores several couples $(c_p, i_p)$, $(c_p, d_p)$ respectively corresponding to a plurality of concepts $c_p$.

- A divulgation habit updater DHU for analyzing the user's habits as concerns divulgation of personal data, by observing the decisions he/she has previously taken for each service, and for each concept. It determines the usual divulgation level $d_p$ that is acceptable by the user for each concept $c_p$. It constitutes a vector $(c_p, d_p)$ where $d_p$ represents the user's usual divulgation level for the concept $c_p$. It also determines the usual user's interest $ic_p$ for the concept $c_p$. It dynamically updates the user's usual divulgation level $d_p$ and interest $ic_p$ for each concept $c_p$, in the divulgation habit database DHDB. So it avoids the user to do this boring task manually.

- A privacy configuration module PCM for providing initial vectors $(c_p, d_p)$ that represent the user's usual divulgation levels $d_p$ respectively for concepts $c_p$, for initializing the content of the database DHDB, when the system starts.

- A win-win computation module WWCM: This module WWCM computes a win-win value $w_i$ for each available service $s_i$. So this module WWCM provides a sorted series of couples $(s_i, w_i)$ where $s_i$ is a service identifier, and $w_i$ is a win-win value. For instance, this series is computed by the two following steps:

  -- 1) Selecting all services that might interest the user. The selection is made by seeking a similarity between the identifiers $s_i$ of the services available at the user's current location, stored in the service descriptions database SDDB, and the service preference vectors $(s_i, i_i)$ stored in the service preference database SPDB for the given user.

-- 2) For each selected service $s_i$, computing a win-win value $w_i$ by computing the similarity between:

--- (i) the vectors $(c_p, d_p)$ of the usual divulgation levels stored in the divulgation habits database DHDB, for the concept $c_p$ to which the service $s_i$ is related; and

--- (ii) the set of metadata $(k_i)$ describing the kinds of personal information the services respectively request, both being read in the service description database SDDB.

The similarity between the vectors $(c_p, d_p)$ and the set of metadata $(k_i)$ can be computed by any suitable similarity metrics between two vectors, known in the art, e. g. the cosine similarity or the Pearson's correlation coefficient.

Optionally, in step 2, the win-win computation module WWCM may take into account filtered contextual information provided by the usage pattern recognition module UPRM. This latter provides such filtered contextual information when the user is in a non-usual situation, that may temporarily impact (i.e. need to reweight) the divulgation levels $d_p$ of the user, because the user has probably an urgent need of finding information. Conversely, it provides again usual contextual information when the user returns to a usual situation.

For example, if the context data handler CDH provides a pattern indicating that the user is late and running, the usage pattern recognition module UPRM recognizes this pattern. It selects the elements of information that may play a role with respect to the divulgation level, and then provides filtered contextual information that enables the win-win computation module WWCM to temporarily increase the divulgation levels of this user, for some concepts (i.e. decrease the usual "privacy control" behavior of the user). Then the win-win computation module WWCM derives, from the usual divulgation levels $(c_p, d_p)$, for this user, "adapted divulgation levels" $(c'_p, d'_p)$ respectively for a plurality of concepts.

When the user returns to a usual situation, the win-win computation module WWCM resets the divulgation levels to their usual values, based on the past behavior of the user.

More generally, the usage pattern recognition module UPRM makes the win-win computation module WWCM to increase or decrease the divulgation levels after comparing the current pattern of contextual information with known patterns corresponding to various situations. These known patterns have been previously observed and recorded for other users in various situations.

**[0037]** - A decision module DM for receiving the sorted series of couples $(s_i, w_i)$ provided by the win-win computation module WWCM and for determining a shorter series of couples $(s_i, w_i)$ corresponding to preselected services to be proposed to the user, whereas the received sorted series of couples $(s_i, w_i)$ correspond to all services available at said location. The decision module DM preselects services by the following method:

-- If the win-win value $w_i$ for a given service $s_i$ is lower than a predetermined value, the user is not prompted to accept, or not, the divulgation of his/her personal data to this service (because the interest of the user for that service is not worth accepting that divulgation of personal data).

-- If the win-win value is greater than the predetermined value, or is on the borderline (or if configured so by the user), the user is prompted to accept, or not, the divulgation of his/her personal data to that service.

So the decision module DM determines a reduced list of services to be prompted to the user, in order to facilitate the user's decision. The decision module DM comprises software means for communicating the reduced list of services to user's mobile terminal MT, via a telecom network: Internet, or a mobile telephony network, etc. The display of this mobile terminal MT is used for prompting the user. The mobile terminal MT displays the reduced list of services (sorted and presented along with their associated win-win values) and warns the user that such or such service implies a divulgation of some personal data information. By means of a keyboard or a touch screen, on the terminal MT, the user allows or forbid a divulgation successively for each proposed service in the displayed list of services.

Thanks to the displayed win-win values, the user can decide and select one or several services that really fit his/her needs as concerns privacy and context. The identifiers of the services that have been allowed by the user are then returned to the decision module DM by the mobile terminal MT. An output of the decision module DM provides the identifiers $s_i$ of the service(s) allowed by the user.

An input of the above mentioned divulgation habit updater DHU receives the identifiers of the services allowed by the user, which are supplied by the decision module DM. It uses them for dynamically updating the usual divulgation level dp for each concept $c_p$ that is relevant to at least one of the allowed services. This automatic updating of the usual divulgation level avoids the user to do this boring task manually.

The new usual divulgation level is computed according to the results of the user's decision (list of services allowed by the user with their associated win-win values), and then is stored in the divulgation habit database DHDB. For instance, if the user repeatedly accepts borderline services related to the concept "football", the divulgation habit updater DHU repeatedly increases the usual divulgation level associated to the concept "football" so that it will not be on the borderline anymore.

- A User profile database UPDB is used for storing a profile for each user, this profile comprising a full set of personal data, and the three dimensions described above.

- A user profile divulgation module UPDM receives the identifier(s) of the service(s) allowed by the user, from the decision module DM. It receives the profile of the user from the user profile database UPDB. And, for each allowed service $s_p$, it receives:

-- from the service preference database SPDB, user's interests $(c_p, ic_p)$ respectively for the concept(s) $c_p$ relevant to this service, and the interest $(s_p, is_p)$ for this service $s_p$;
-- from the service description database SDDB, the metadata $k_i$ of describing the kind of personal data requested by this service.

The user profile divulgation module UPDM determines a subset of personal data that it will communicate to a service provider, respectively for each service allowed by the user. This subset is determined according to the metadata $k_i$ describing the kind of personal data requested by the service, and, if a service may be used with different subsets of personal data, it selects one of these subsets according to user's interests $(c_p, i_{cp})$ respectively for the concept(s) relevant to this service, and the user's interest $(s_p, is_p)$ for this service. So this module UPDM can generate, for each allowed service, a reduced user profile containing only the user's personal data needed for this service. Thus only mandatory personal information is disclosed to the service provider.

The system according to the invention facilitates a user's decision to divulgate personal data, because it prompts him/her to select a service by supplying a list of preselected services; and by supplying, for each preselected service, a win-win value representing the degree of intrusiveness of the service (according to user's divulgation habits) compared to the benefits it brings to the user.

In addition, this list of preselected services may take into account some contextual parameters (physical, contextual, intentional) to temporarily alter this ordering. For example, in case of emergency (accident, etc.), the user may be ready to share his location to be proactively proposed relevant services around; or when the user is with a group of friends, he/she may be ready to divulgate his/her cinema tastes in order to get a group recommendation.

Several distributions of the components of the invention can be envisaged. In a fully distributed version, the win-win computation module, the win-win decision module and the user profile divulgation module can run on the user terminal. On the other hand, in a completely centralized one, all the modules except some sensor sources and the mobile terminal display module are hosted in back-end servers. The figure is a functional view of one exemplary embodiment of the system according to the invention and it does not preclude other possible distributions.

**Claims**

1. A system (S) for helping a user to decide to accept, or not, an available service/application that implies to communicate some personal data, **characterized in that** it comprises:

- means (DHU, DHDB) for determining, for each user, divulgation levels respectively for a plurality of concepts, each available service being related to at least one of these concepts;
- means (WWCM) for computing a so called win-win value, for each service, this value representing a trade-off between the drawbacks of divulgating personal data for using this service, and the advantages brought to this user by this service, as a function of divulgation levels respectively determined for the concepts related to this service;
- means (DM) for preselecting services among available services, by selecting the services for which the computed win-win value is greater than a predetermined value;
- decision means (DM) for prompting the user, for each preselected service, to accept, or not, the divulgation of his/her personal data for benefitting from this preselected service;
- means (DM, DHU) for receiving the identifiers of the services previously allowed by the user, from the decision means (DM), and for dynamically updating the respective divulgation level for each concept that is relevant to at least one of the allowed services;
- means (UPDM, UPDB) for receiving the identifiers of the services currently allowed by the user, from the decision means (DM), and then determining a subset of personal data to be communicated to a service provider, respectively for each service allowed by the user.

2. A system (S) according to claim 1, further comprising:

- means for collecting contextual information (CDH);
- means (UPRM) for recognizing usage patterns in the collected contextual information, selecting the elements of information that may play a role with respect to the divulgation levels, and providing filtered contextual information when the user is in a non-usual situation;

and wherein said means (WWCM) for computing a so called win-win value comprise means for taking into account filtered contextual information provided by the usage pattern recognition module (UPRM) for determining, for said user, adapted divulgation levels respectively for a plurality of concepts, when said user is in a non-usual situation;

and then computing a win-win value, for each service, as a function of the adapted divulgation levels respectively determined for the concepts related to this service.

3. A system (S) according to claim 2, wherein said means (UPRM) for recognizing usage patterns in the collected contextual information, selecting the elements of information that may play a role with respect to the divulgation levels, and providing filtered contextual information when the user is in a non-usual situation, comprise means for comparing the current pattern of contextual information with known patterns corresponding to various situations, and that have been previously observed and recorded for other users in various situations.

4. A system (S) according to claim 1, wherein the decision means (DM) comprise means for:

- not prompting the user if the win-win value for a given service is lower than a predetermined value,
- prompting the user if the win-win value for this given service is greater than the predetermined value.

5. A system (S) according to claim 1, wherein the means (DHU, DHDB) for determining, for each user, divulgation levels respectively for a plurality of concepts comprises :

- means for receiving the identifiers of the services allowed by the user, which are supplied by the decision means (DM);
- means for dynamically determining a so called usual divulgation level for each concept that is relevant to at least one of the allowed services as a function of the identifiers of the services allowed by the user;
- and means for storing the usual divulgation level in a divulgation habit database (DHDB).

6. A system (S) according to claim 1, wherein the means (UPDM, UPDB) for receiving the identifiers of the services currently allowed by the user, from the decision means (DM), and then determining a subset of personal data to be communicated to a service provider, respectively for each service allowed by the user, comprise:

- means for receiving a profile of the user from a user profile database (UPDB);
- means for receiving,

-- from a service preference database (SPDB), user's interests respectively for the concepts relevant to each allowed service, and the user's interest for each allowed service;

-- from a service description database (SDDB), metadata describing the kind of personal data requested for each allowed service;

- means for determining a subset of personal data that will be communicated to a service provider, respectively for each service allowed by the user, this subset being determined according to the metadata describing the kind of personal data requested by this service, and, if this service may be used with different subsets of personal data, selecting one of these subsets according to user's interests respectively for the concepts relevant to this service, and according to the user's interest for this service.

Figure unique

User profile for each service

UPDM — User profile divulgation module

UPDB — User profile database

Service choice

DM — Décision module

DHU — Divulgation habit updater

MT

DHDB

PCM — Privacy configuration module

Divulgation habits

(service win-win degree)

WWCM — Win-win computation module

Preferences related to surrounding services

SPDB

SPLM — Service preference learning module

Service Preferences associated usage patterns

Current user usage Pattern

UPRM — Usage pattern recognition module

Surrounding service descriptions

SDDB — Contextual services

Service descriptions

CDH — Contextual data handler

Social environment  GPS  Compass Sound Network Agenda

User service usage traces

S

9

**EUROPEAN SEARCH REPORT**

Application Number

EP 10 30 5577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/026659 A2 (ASCENTIAL SOFTWARE CORP [US]; ARJUN VINODH [US]; BORDA HERNANDO [US];) 9 March 2006 (2006-03-09) * the whole document * ----- | 1-6 | INV. G06Q10/00 |

TECHNICAL FIELDS SEARCHED (IPC)

G06Q

The present search report has been drawn up for all claims

| Place of search | Date of completion of the search | Examiner |
|---|---|---|
| Munich | 28 September 2010 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 30 5577

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2010

| Patent document cited in search report | Publication date | Patent family member(s) | Publication date |
|---|---|---|---|
| WO 2006026659 A2 | 09-03-2006 | CN 101048732 A <br> EP 1810131 A2 | 03-10-2007 <br> 25-07-2007 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAN KOLTER ; THOMAS KERNCHEN ; GÜNTHER PERNUL.** *Collaborative Privacy - A Community-based Privacy Infrastructure, http://epub.uni-regensburg.de/6964/1/KKPO9.pdf*